# EUROPÄISCHE PATENTSCHRIFT

(11) **EP 1 197 732 B1**
(45) Veröffentlichungstag und Bekanntmachung des Hinweises auf die Patenterteilung: **21.03.2007**
(21) Anmeldenummer: 00122136.5
(22) Anmeldetag: 12.10.2000
(51) Int. Cl.: G01F 1/84, G01F 25/00

(54) **Prüfgerät für ein Coriolis-Massedurchflussmessgerät**
Test device for a Coriolis mass flow meter
Dispositif de test pour un débitmètre massique de Coriolis

(43) Veröffentlichungstag der Anmeldung: 17.04.2002
(73) Patentinhaber: Endress + Hauser Flowtec AG, 4153 Reinach BL 1 (CH)
(72) Erfinder: Matt, Christian, 4147 Aesch (CH)
(74) Vertreter: Hahn, Christian

(56) Entgegenhaltungen:
- DE-A- 3 829 063
- DE-A- 19 653 020
- DRAHM W., MATT C.: "Coriolis-Massedurchflussmessung - Gerades Einohrsystem mit neuer Schwingunskompensation" ATP-AUTOMATISIERUNGSTECHNISCHE PRAXIS, Bd. 40, Nr. 9, 1998, Seiten 24-29,
- PROFOS P., PFEIFER T.: "Handbuch der industriellen Messtechnik" 1994, R. OLDENBOURG VERLAG , MÜNCHEN WIEN * Seite 406 - Seite 407 *

## Beschreibung

Die Erfindung betrifft ein Prüfgerät für ein Coriolis-Massedurchflußmessgerät.

Zur Bestimmung des Massedurchflusses von Fluiden in Rohrleitungen werden vielfach Coriolis-Massedurchflußmessgeräte eingesetzt. Diese Massedurchflußmessgeräte nutzen den Coriolis-Effekt aus, der auf strömende Medien in bewegten Bezugssystemen wirkt.

Um ein bewegtes Bezugsystem zu generieren wird eine Meßanordnung mit mindestens einem Meßrohr, in dem das Fluid strömt, zu Schwingungen angeregt.

Neben Meßgeräten mit einem Meßrohr sind auch Meßgeräte mit mehreren meist parallel angeordneten Meßrohren bekannt. In beiden Fällen (ein einziges Meßrohr bzw. mehrere Meßrohre) werden sowohl gerade als auch gebogene Rohre eingesetzt.

Zur Schwingungserregung sind entsprechende Erreger vorgesehen, die die Meßrohre meist auf ihrer Resonanzfrequenz zur Schwingung anregen. Diese Resonanzfrequenz hängt u.a. vom Material und den Abmessungen des Meßrohrs sowie der Dichte des strömenden Fluids ab.

Mit Hilfe mindestens zweier Schwingungsaufnehmer, die in Strömungsrichtung voneinander beabstandet angeordnet sind, wird die Schwingungsbewegung des Meßrohrs bzw. der Meßrohre aufgenommen. Aus dieser Schwingungsbewegung, die durch den Coriolis-Effekt beeinflußt wird, läßt sich der Massedurchfluß des Fluids bestimmen.

Die Schwingungsaufnehmer wandeln die Schwingungsbewegung in analoge Meßaufnehmersignale um, deren Frequenz gleich der Schwingungsfrequenz des Meßrohrs ist und die in Abhängigkeit des Massedurchflusses des Fluids gegeneinander phasenverschoben sind.

Die Meßaufnehmersignale werden zur Bestimmung des Massedurchflusses in einer Elektronikeinheit des Coriolis-Massedurchflußmessgerätes ausgewertet. Die Elektronikeinheit liefert ein Meßsignal, welches dem momentanen Massedurchfluß des Fluids entspricht. Eine entsprechende Schaltung ist aus der EP 866 319 bekannt.

Das Meßsignal wird an eine Anzeigeeinheit weitergeleitet, die den Wert des momentan gemessenen Massedurchflusses anzeigt.

In der Regel wird das Meßsignal nicht nur zur optischen Darstellung am Ort der Meßanordnung benötigt, sondern zur Prozeßsteuerung auch in einer weiter entfernt gelegenen zentralen Steuereinheit. Aus diesem Grund besteht eine Verbindung zwischen dem Coriolis-Massedurchflußmessgerät und der Steuereinheit über eine Daten-kommunikationsleitung.

Die Übertragung des Meßsignals zur Steuereinheit erfolgt in bekannter Weise analog oder digital entsprechend den bekannten internationalen Standards (4-20 mA Stromschleife, HART, PROFIBUS, FOUNDATION FIELDBUS, CAN etc.) für Kommunikationsverbindungen von Feldgeräten.

Bei der Elektronikeinheit handelt es sich um eine komplexe hochintegrierte elektronische Schaltung, die eine Vielzahl von Funktionen erfüllen muß, deren Gesamtheit die Funktionalität des Coriolis-Massedurchflußmessgeräts ausmacht. Die Realisierung der verschiedenen Funktionen erfolgt mit Hilfe einer digitalen Steuerung, deren wesentlicher Teil ein programmierbarer Mikrocontroller ist.

Die Meßgenauigkeit eines Coriolis-Massedurchflußmessgeräts wird entscheidend durch die Elektronikeinheit, die Software und den mechanischen Aufbau des Meßrohrs beeinflußt.

Coriolis-Massedurchflußmessgeräte werden in unterschiedlichen industriellen Bereichen eingesetzt. Hierbei werden je nach Anwendungs-bereich unterschiedliche Anforderungen an Genauigkeit und Zuverlässigkeit gestellt.

In manchen Bereichen sind diese Anforderungen gesetzlich vorgeschrieben oder zur Erfüllung von Zertifizierungsanforderungen z.B. ISO9000 notwendig.

Um die Genauigkeit eines Coriolis-Massedurchflußmessgeräts zu bestimmen ist eine Kalibrierung erforderlich. Dazu muß ein genau einstellbarer Nenndurchfluß bereitgestellt werden. Diese Möglichkeit besteht nur in aufwendigen Kalibrieranlagen, die meist nur dem Hersteller zur Verfügung stehen.

In der Regel erfolgt die Kalibrierung am Ende des Herstellungsprozesses. Nach der Auslieferung der Geräte bestehen beim Endkunden, der das Meßgerät einsetzt, keine Möglichkeit mehr zur Überprüfung der Genauigkeit.

Der Endkunde muß sich auf den von dem Meßgerät gelieferten Wert des Massedurchflusses verlassen können.

Bei hochintegrierten komplexen elektronischen Schaltungen, wie sie in Coriolis-Massedurchflußmessgeräten eingesetzt werden, sind Fehlfunktionen, die das Meßergebnis mehr oder weniger stark beeinflussen können, nie völlig auszuschließen. Prinzipiell sind zwei Fehlerquellen denkbar, die Meßaufnehmer, die Schwingungen der Meßrohre in elektrische Signale umwandeln, bzw. die Elektronikeinheit.

Normalerweise wird der Anwender nur grobe Fehlerfunktionen bemerken, die sich unrealistisch auf den Meßwert auswirken.

Fehlfunktionen, die sich nur wenig auf den Meßwert auswirken, werden normalerweise gar nicht bemerkt.

Treten Fehlfunktionen auf, so ist es im Sevicefall vor Ort meist schwierig zu entscheiden, wo ein möglicher Fehler vorliegen könnte, auf der Seite der Meßaufnehmer oder auf der Seite der Auswerteelektronik.

Bei manchen Anwendungen ist auch eine regelmäßige Überprüfung des Coriolis-Massedurchflußmessgeräts notwendig bzw. nach dem deutschen Wasserhaushaltsgesetz sogar gesetzlich vorgeschrieben. Hierzu ist dann ein Ausbau des Meßgerätes notwendig.

Eine derartige Maßnahme ist arbeits-, zeit- und kostenaufwendig, teilweise ist es sogar notwendig hierfür die Produktion für längere Zeit zu unterbrechen.

Zumindest für Durchflußmesser vom magnetisch-induktiven Typ ist ein Prüfgerät für Einstellungs- und Wartungsarbeiten beschrieben worden, mit dem ein Simulationssignal erzeugt wird, siehe DE-A-38 29 063.

Aufgabe der Erfindung ist es, ein Prüfgerät für ein Coriolis-Massedurchflußmessgerät zu schaffen, das in einfacher Weise eine Überprüfung eines Coriolis-Massedurchflußmessgeräts vor Ort ermöglicht, ohne daß ein Ausbau des Geräts notwendig ist.

Gleichzeitig sollte die Überprüfung von hoher Genauigkeit sein, um den strengen Anforderungen im Hinblick auf Validierung und Zertifizierung zu genügen.

Gelöst wird diese Aufgabe durch ein Prüfgerät für ein Coriolis-Massedurchflußmessgerät, das mit einem Coriolis-Massedurchflußmessgerät verbindbar ist und eine Simulationselektronikeinheit zur Erzeugung von Testsignalen aufweist, die den phasenverschobenen Meßaufnehmersignale eines Coriolis-Massedurchflußmessgeräts bei bestimmten wählbaren Werten für die Kenndaten, wie Massedurchfluß, Dichte, Rohrdurchmesser etc., entsprechen und die anstelle der Meßaufnehmersignale des Coriolis-Massedurchflußmessgeräts in einer Elektronikeinheit des Coriolis-Massedurchflußmessgeräts ausgewertet werden, wobei das Prüfgerät so eingerichtet ist, daß es diejenigen Werte der Kenndaten, die im Coriolis-Massedurchflußmesser gespeichert sind, mit Ausnahme des Massedurchflusses, nach der Verbindung des Prüfgeräts mit dem Coriolis-Massedurchflußmesser aus diesem ausliest.

Ein derartiges Prüfgerät ermöglicht in einfacher Weise eine Überprüfung der Funktionsfähigkeit eines Coriolis-Massedurchflußmess-Geräts ohne, daß ein Ausbau des Gerätes notwendig ist.

Mit Hilfe dieses Prüfgerätes ist eine einfache Entscheidung möglich auf welcher Seite, Meßaufnehmer oder Meßelektronik, ein möglicher Fehler zu suchen ist.

Gemäß einer bevorzugten Weiterentwicklung der Erfindung, umfasst die Simulationselektronikeinheit eine Addierstufe, in der ein Sinus-Signal und ein Cosinus-Signal zur Erzeugung zweier phasenverschobener Signale kreuzweise addiert bzw. subtrahiert werden.

Gemäß einer bevorzugten Weiterentwicklung der Erfindung, umfasst die Simulationselektronikeinheit eine analoge Addierstufe AADD..

Gemäß einer bevorzugten alternativen Weiterentwicklung der Erfindung, umfasst die Simulationselektronikeinheit eine digitale Addierstufe AADD.

Gemäß einer bevorzugten dritten bevorzugten alternativen Weiterentwicklung erzeugt die Simulationselektronikeinheit zwei gegeneinander phasenverschobene Sinussignale.

Gemäß einer bevorzugten Weiterentwicklung der Erfindung, umfaßt das Prüfgerät eine Druckerausgabe. Über die Druckerausgabe kann das Ergebnis der Überprüfung ausgedruckt werden.

Gegenstand der Erfindung ist auch ein Verfahren zur Überprüfung eines Coriolis-Massedurchflußmessgerätes. Nachfolgend ist die Erfindung anhand mehrerer in der Zeichnung dargestellten bevorzugten Ausführungsbeispiele näher erläutert.

Es zeigen:
Fig. 1 Prüfgerät für ein Coriolis-Massedurchflußmessgerät mit Coriolis-Massedurchflußmessgerät in schematischer Darstellung,
Fig. 1b Ausschnittvergrößerung gemäß Fig. 1
Fig. 2a Prüfgerät für ein Coriolis-Massedurchflußmessgerät gemäß einem ersten Ausführungsbeispiel in schematischer Darstellung,
Fig. 2b Prüfgerät für ein Coriolis-Massedurchflußmessgerät gemäß einem zweiten Ausführungsbeispiel in schematischer Darstellung,
Fig. 2c Prüfgerät für ein Coriolis-Massedurchflußmessgerät gemäß einem dritten Ausführungsbeispiel in schematischer Darstellung.

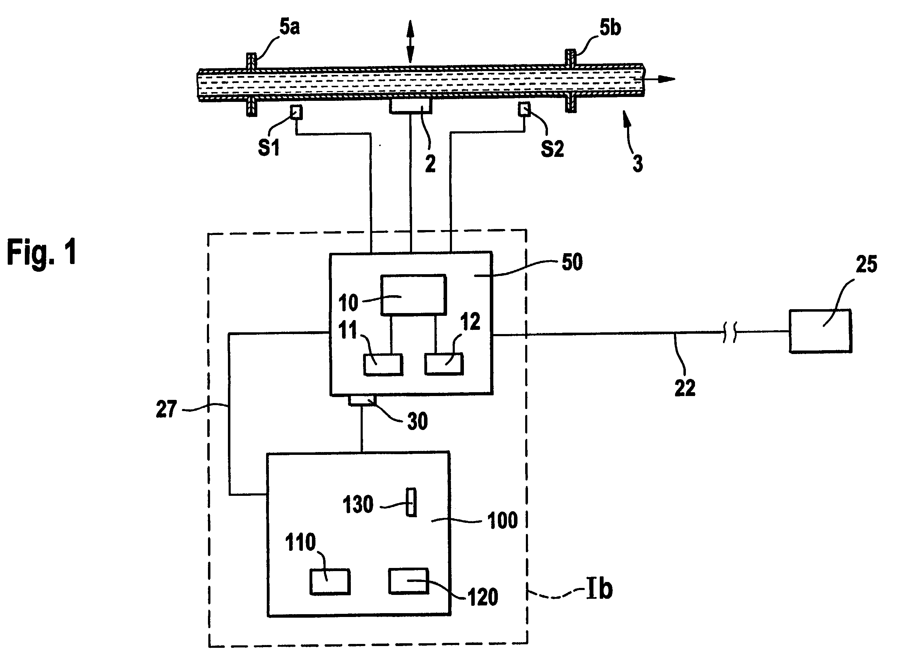

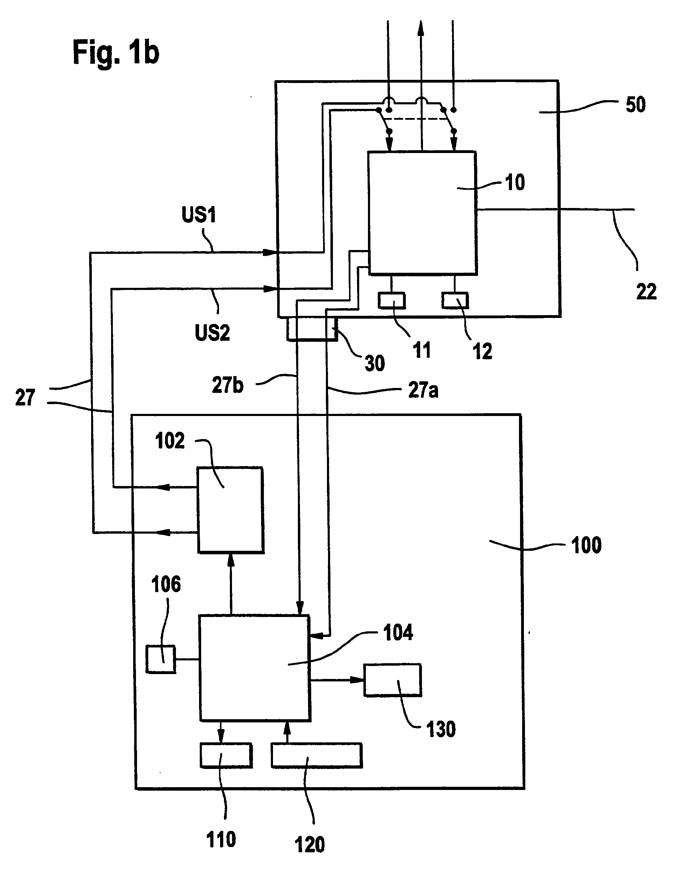

In Fig. 1 ist ein Prüfgerät für ein Coriolis-Massedurchflußmessgerät und eine Meßanordnung mit einem Coriolis-Massedurchflußmessgerät schematisch dargestellt.

In einem Meßrohr 3 fließt ein Fluid in Pfeilrichtung. Das Meßrohr 3 ist über zwei Flansche 5a, 5b mit der nicht näher dargestellten Prozeßrohrleitung verbunden. Wie bereits erwähnt sind auch Meßanordnungen mit mehreren Meßrohren bekannt.

Mit Hilfe eines Erregers 2 wird das Meßrohr 3 in Schwingung versetzt. Der Erreger 2 besteht aus einem elektromagnetischen Wandler, der elektrische Energie in mechanische Energie umwandelt.

Die Schwingungsbewegung des Meßrohres 3 wird über zwei in unmittelbarer Nähe des Meßrohres 3 angeordneten Meßaufnehmer S1 und S2 aufgenommen.

Die Meßaufnehmersignale der beiden Meßaufnehmer S1 und S2 werden in einem Coriolis-Massedurchflußmessgerät 50 ausgewertet. Diese beiden Meßaufnehmersignale S1 und S2 dienen einerseits zur Bestimmung des Massedurchflusses des Fluids, andererseits auch zur Regelung der Schwingungsamplitude des Meßrohrs 3.

Hierzu wird die Frequenz f und der Erregerstrom für den Erreger 2 mittels des Coriolis-Massedurchflußmessgeräts 50 geregelt.

Das Coriolis-Massedurchflußmessgerät 50 besteht im wesentlichen aus einer Elektronikeinheit 10, die analog und/oder digital arbeiten kann, einer Anzeigeeinheit 11 und einer Tastatur 12. Über eine Datenkommunikationsleitung 22 ist die Elektronikeinheit 10 mit einer Steuereinheit 25 verbunden. Bei der Steuereinheit 25 kann es sich im ein Prozeßleitsystem, eine speicherprogrammierbare Steuerung oder dergleichen handeln.

Über einen Seviceanschluß 30 ist das Coriolis-Massedurchflußmessgerät 50 mit einem Prüfgerät 100 verbunden. Das Prüfgerät 100 besteht im wesentlichen aus einer Anzeige 110, einer Eingabetastatur

120, einer Druckerausgabe 130, einer Simulationselektronik 102 und einem Speicher 106, die jeweils mit einem Mikroprozessor 104 verbunden sind. Die analogen Testsignale werden in einer Simulationselektronikeinheit 102 erzeugt. Zur Übertragung der Testsignale vom Prüfgerät zum Coriolis-Massedurchflußmeßgerät 50 dient eine Testsignalleitung 27.

Bei dem Speicher 106 handelt es sich um einen permanenten Speicher für Daten und Programme. Die Programme werden vom Speicher 106 in den Mikroprozessor 104 geladen und dort ausgeführt.

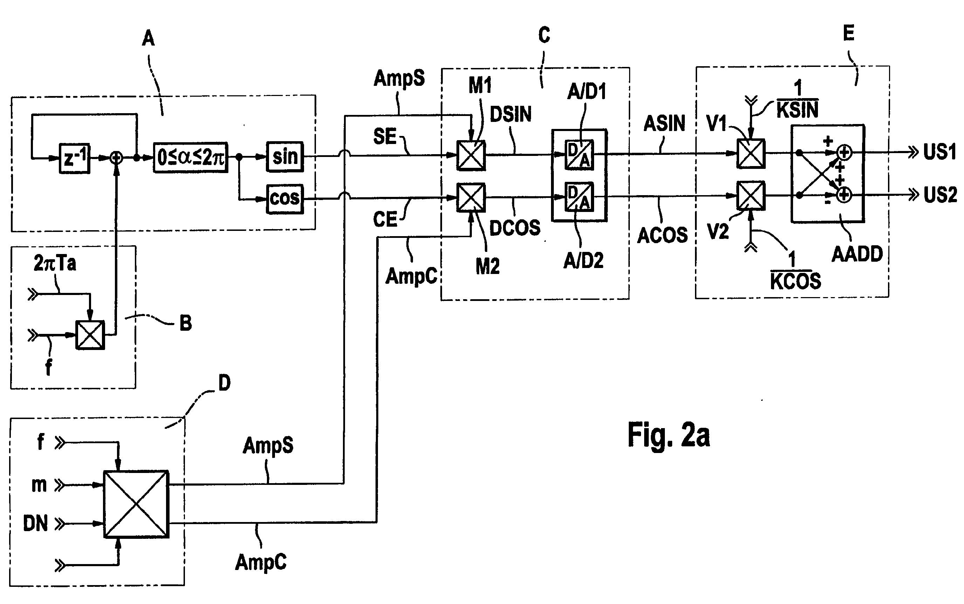

In Fig. 2a ist die Signalerzeugung der Simulationselektronikeinheit 102 gemäß einem ersten Ausführungsbeispiel schematisch dargestellt.

Sie dient im wesentlichen zur Erzeugung der Testsignale US1 bzw. US2, die den Meßaufnehmersignalen S1 und S2 z.B. bei einer bestimmten Erregerschwingung, einem bestimmten Fluid (Dichte) und bei einem bestimmten Massedurchfluß m entsprechen.

Zur Verdeutlichung ist die Funktion der Simulationselektronikeinheit 102 in mehrere Funktionsblöcke unterteilt. Teilweise werden bestimmte Funktionsblöcke auch bei den weiteren Ausführungsbeispielen eingesetzt. Jedem Funktionsblock entspricht eine entsprechende Schaltung bzw. Teilschaltung.

Funktionsblock A dient zur Erzeugung eines Sinuseinheitssignals SE und eines zu diesem um 90 Grad verschobenen Cosinuseinheitssignals CE. Die Frequenz f dieser beiden Signale SE und CE entspricht der Schwingfrequenz des Meßrohrs 3.

Durch laufende Addition eines Phaseninkrementes dα erhöht sich der Phasenwinkel α fortlaufend. Da die Winkelfunktionen allgemein periodisch mit 2π sind, reicht es den Winkelwert α auf das Intervall von 0 bis 2π zu beschränken.

Im Funktionsblock B wird das Phaseninkrement dα für die Erzeugung der Sinus- bzw. Cosinuseinheitsignale im Funktionsblock A bereitgestellt.

Das Phaseninkrement dα wird aus dem Produkt aus Frequenz f und dem Faktor 2πTa gebildet, wobei Ta die Abtastzeit ist. Ta entspricht etwa dem dritten Teil der inversen Frequenz (1/f)

Im Funktionsblock C werden die Einheitssignale SE und CE mit den entsprechenden Amplitudenwerten AmpS und AmpC in je einem Multiplizierer M1, M2 multipliziert, deren beide Ausgängen jeweils ein digitales Sinussignal DSIN und ein digitales Cosinussignal DCOS liefern. Diese beiden Signale DSIN und DCOS werden jeweils an einem Digital-Analog-Wandler A/D1 und A/D2 weitergeleitet und in entsprechende analogen Spannungssignale ASIN und ACOS umgewandelt.

Die Amplituden AmpS und AmpC werden im Funktionsblock D in Abhängigkeit der Kenndaten wie Frequenz f, Massedurchflusses m, Nennweite DN des Meßrohrs 3 und weiterer Faktoren (z.B. Kalibrierfaktoren) bestimmt.

Die notwendigen Eingabewerte für die Frequenz f, den Massedurchfluß m und die Nennweite DN etc. können von Hand über die Tastatur 120 des Prüfgerätes 100 eingegeben werden.

Gemäß der Erfindung werden jedoch diejenigen Kenndaten, die im Coriolis-Massedurchflußmessgerät 50 abgespeichert sind, direkt aus einem entsprechenden Speicher der Elektronikeinheit 10 über die Serviceleitung 27a eingelesen werden.

Die einzige verbleibende Größe ist der Massedurchfluß m, die von Hand einzugeben ist. Alternativ werden in einer automatischen Prüfprozedur vorgegebene Prüfpunkte mit bestimmten Werten für den Massedurchfluß m angefahren.

Die analogen Spannungssignale ASIN und ACOS werden noch entsprechend dem Funktionsblock E in zwei Verstärker V1 und V2 jeweils mit den entsprechenden Kalibrierfaktoren KSIN bzw. KCOS gewichtet und in einer analogen Addierstufe AADD kreuzweise addiert bzw. subtrahiert.

Durch die kreuzweise Addition bzw. Subtraktion von Sinus- und Cosinussignalen erhält man zwei gegeneinander phasenverschobene kontinuierliche sinusförmige Signale.

Am Ausgang der Addierstufe AADD liegen somit zwei analoge Spannungssignale US1 und Signal US2 an. Diese beiden Signale US1 bzw. US2 entsprechen jeweils den Meßaufnehmersignalen, die die beiden Schwingungsaufnehmern S1 und S2 bei einem vorgegebenen Massedurchfluß m messen würden.

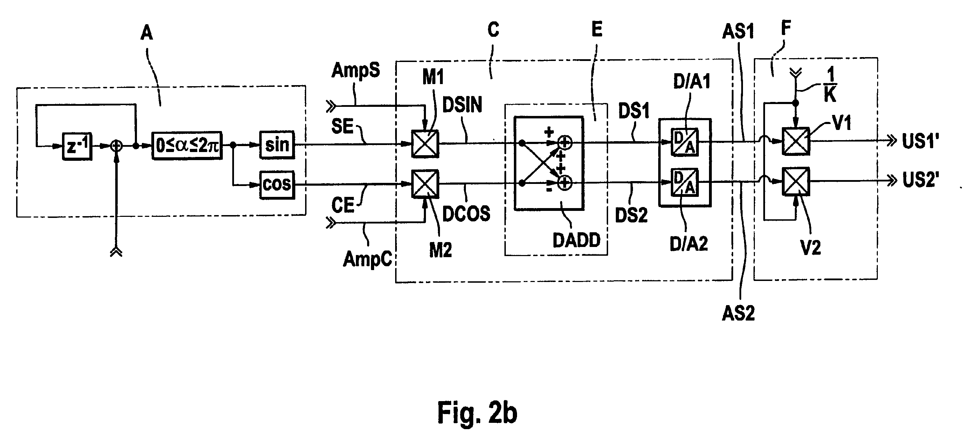

In Fig. 2b ist ein zweites Ausführungsbeispiel schematisch dargestellt. Bis zur Erzeugung der beiden digitalen Signale DSIN und DCOS unterscheiden sich die beiden Ausführungsbeispiele eins und zwei nicht. D.h. alle Funktionsblöcke, die zur Erzeugung dieser beiden Signale notwendig sind bleiben gleich. Die beiden Signale DSIN und DCOS werden in diesem Ausführungsbeispiel aber nicht unmittelbar in analoge Signale umgewandelt sondern erst in einer digitalen Addierstufe DADD kreuzweise addiert bzw. subtrahiert. So erhält man zwei digitale Signale DS1=DSIN + DCOS und DS2= DSIN -DCOS.

Diese beiden Signale DS1 und DS2 werden in jeweils einem Digital-Analog-Wandler D/A1 und Digital-Analog-Wandler D/A2 in analoge Signale AS1 und AS2 umgewandelt.

Die analogen Spannungssignale AS1 und AS2 werden noch in zwei Verstärker V1 und V2 jeweils mit dem Kalibrierfaktor K gewichtet. Am Ausgang des Verstärkers V1 liegt ein Signal US1', am Ausgang des Verstärkers V2 ein Signal US2' an.

Diese beiden Signale US1 bzw. US2 entsprechen somit wieder jeweils den Meßaufnehmersignalen, die die beiden Schwingungsaufnehmern S1 und S2 bei einem vorgegebenen Massedurchfluß messen würden. Sie werden aber auf eine etwas andere Art und Weise als im ersten Ausführungsbeispiel gewonnen.

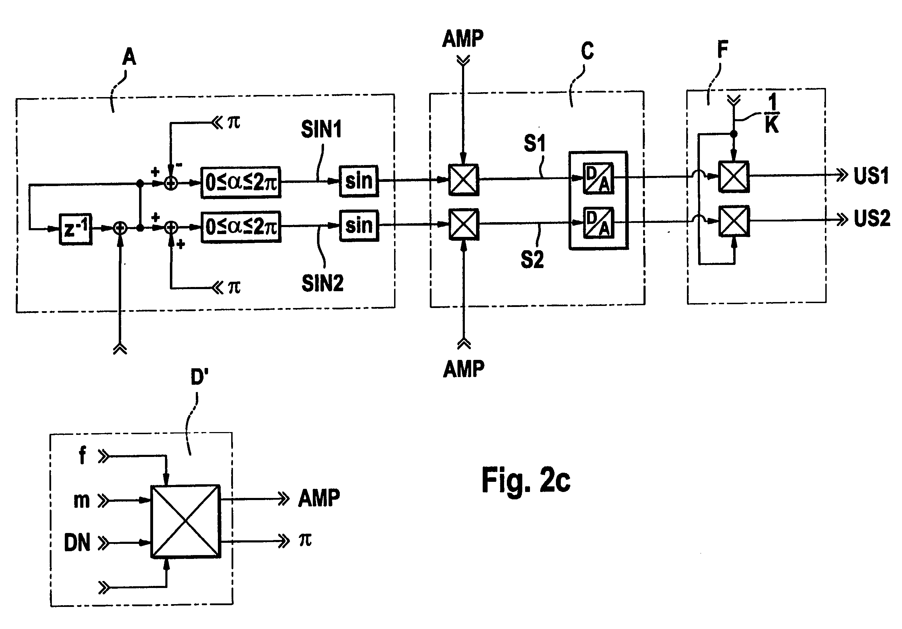

In Fig. 2c ist ein drittes Ausführungsbeispiel schematisch dargestellt.

Bei diesem Ausführungsbeispiel werden zwei gegeneinander phasenverschobene digitalen Sinussignale SIN1 und SIN2 erzeugt. Die Größe der Phasenverschiebung, der Phasenwinkel π, entspricht gerade dem Corioliswinkel. Der Phasenwinkel π wird in einem abgewandelten Funktionsblock D' bestimmt. Die Eingangsgrößen der FunktionsblockD' entsprechen den Eingangsgrößen der Funktionsblock D der beiden ersten Ausführungsbeispielen. Der wesentliche Unterschied besteht darin, daß der Funktionsblock D' nicht die beiden Amplitudenwerte AMPS und AMPC ausgibt, sondern nur einen Amplitudenwert AMP und den Phasenwinkel π.

Die weitere Signalverarbeitung erfolgt wie im zweiten Ausführungsbeispiel mit dem einzigen Unterschied, daß die Addierstufe mit der kreuzweisen Addition bzw. Subtraktion entfällt.

Nachfolgend ist die Funktionsweise des Prüfgerätes 100 näher erläutert.

Zur Überprüfung eines Coriolis-Massedurchlußmeßgeräts wird das Prüfgerät 100 mit dem Seviceanschluß 30 des Coriolis-Massedurchflußmeßgeräts verbunden. Nach dem Start des Bedienprogramms des Prüfgeräts werden alle Kenndaten des Coriolis-Massedurchlußmeßgeräts z.B. Nennweite, Frequenz f etc. über die Serviceleitung 27a in das Prüfgerät 100 eingelesen.

Über die Eingabetatstatur 120 wird der gewünschte Massedurchfluß m eingegeben.

Denkbar ist auch, daß die Steuereinheit S in zeitlichen Abständen nacheinander bestimmte Massedurchflußwerte m selbständig erzeugt.

Die Steuereinheit 104 überträgt alle relevanten Daten an die Simulatorelektronik 102 , die die entsprechenden Testsignale US1 bzw. US2 für das Coriolis-Massedurchlußmeßgerät erzeugt.

Das Coriolis-Massedurchlußmeßgerät wertet die beiden Testsignale US1 und US2 aus und übermittelt die Ergebniswerte (Massedurchfluß, Dichte etc.) der Auswertung an die Steuereinheit 104.

In der Steuereinheit werden die Ergebniswerte (Istwerte) mit den durch die Kenndaten vorgegebenen Sollwerten für die entsprechenden Werte (Massedurchfluß, Dichte) verglichen. Je nach Abweichung zwischen Ergebniswerten und Sollwerten wird ein Prüfergebnis ermittelt.

Bestehen nur geringfügige Unterschiede (innerhalb gewisser vorgegebener Grenzen) so gilt die Überprüfung als erfolgreich und es erfolgt z.B. eine entsprechender Hinweis in der Anzeige 110 "Prüfung bestanden".

Sind die Abweichungen erheblich, so erfolgt ebenfalls ein entsprechender Hinweis "Prüfung nicht bestanden".

Je nach Genauigkeitsanforderungen sind die Grenzwerte für die Abweichungen unterschiedlich. Die Grenzwerte können z.B. im Speicher 106 abgespeichert werden.

In einer vorteilhaften Weiterentwicklung der Erfindung wird das Ergebnis der Prüfung über die Druckerausgabe 130 in Papierform ausgegeben und kann so unmittelbar protokolliert werden.

## Patentansprüche

1. Prüfgerät für ein Coriolis-Massedurchflußmessgerät, das mit einem Coriolis-Massedurchflußmessgerät (50) verbindbar ist und eine Simulationselektronikeinheit (102) zur Erzeugung von Testsignalen US1, US2 aufweist, die den phasenverschobenen Meßaufnehmersignalen eines Coriolis-Massedurchflußmess-Geräts bei bestimmten wählbaren Werten für die Kenndaten wie Massedurchfluß, Dichte, Rohrdurchmesser etc., entsprechen und die anstelle der Meßaufnehmersignale in einer Elektronikeinheit (10) des Coriolis-Massedurchflußmessgeräts ausgewertet werden,
wobei das Prüfgerät so eingerichtet ist, daß es diejenigen Werte der Kenndaten, die im Coriolis-Massedurchflussmesser gespeichert sind, mit Ausnahme des Massedurchflusses, nach der Verbindung des Prüfgeräts mit dem Coriolis-Massedurchflussmesser aus diesem ausliest.

2. Prüfgerät nach Anspruch 2, **dadurch gekennzeichnet, daß** die Simulationselektronikeinheit (102) eine Addierstufe E aufweist, in der ein Sinus-Signal und ein Cosinus-Signal zur Erzeugung zweier phasenverschobener Signale kreuzweise addiert bzw. subtrahiert werden.

3. Prüfgerät nach Anspruch 2, **dadurch gekennzeichnet, daß** die Addierstufe E als analoge Addierstufe AADD ausgelegt ist.

4. Prüfgerät nach Anspruch 2, **dadurch gekennzeichnet, daß** die Addierstufe E als digitale Addierstufe DADD ausgelegt ist.

5. Prüfgerät nach Anspruch 1, **dadurch gekennzeichnet, daß** die Simulationselektronikeinheit (102) eine digitale Signalerzeugungseinheit A zur Erzeugung zweier gegeneinander phasenverschobenen Sinussignale SIN1 und SIN2 aufweist.

6. Prüfgerät nach einem der vorhergehenden Ansprüche, **dadurch gekennzeichnet, daß** das Prüfgerät (100) zur Ausgabe des Prüfergebnisses eine Druckerausgabe (130) aufweist.

7. Verfahren zur Überprüfung eines Coriolis-Massedurchflußmessgerätes mit einem Prüfgerät nach einem der vorhergehenden Ansprüche, mit dem zwei Testsignale US1, US2 erzeugt werden, die den phasenverschobenen Meßaufnehmersignalen eines Coriolis-Massedurchflußmessgeräts bei vorgegebenen Werten der Kenndaten Massedurchfluß, Dichte und/oder Rohrdurchmesser entsprechen, die im Coriolis-Massedurchflußmessgerät ausgewertet werden und wobei die Ergebniswerte dieser Auswertung dem Prüfgerät übermittelt werden, wobei im Prüfgerät die Ergebniswerte mit durch die Kenndaten vorgegebenen Sollwerten verglichen werden und je nach Abweichung ein Validierungsergebnis ermittelt wird.

## Claims

1. Test device for a Coriolis mass flowmeter, which can be connected to a Coriolis mass flowmeter (50) and has a simulation electronics unit (102) for generating test signals US1, US2 which correspond to the phase-shifted measurement transducer signals of a Coriolis mass flowmeter at defined selectable values for the characteristic data, such as mass flow rate, density, pipe diameter, etc., and which are evaluated instead of the measurement transducer signals in an electronics unit (10) of the Coriolis mass flowmeter,
the test device being set up in such a way that, after it has been connected to the Coriolis mass flowmeter, it reads out from the latter those values of the characteristic data which are stored in the Coriolis mass flowmeter, with the exception of the mass flow rate.

2. Test device according to Claim 2, **characterised in that** the simulation electronics unit (102) has an adding stage E, in which a sine signal and a cosine signal are added or subtracted crosswise in order to generate two phase-shifted signals.

3. Test device according to Claim 2, **characterised in that** the adding stage E is designed as an analog adding stage AADD.

4. Test device according to Claim 2, **characterised in that** the adding stage E is designed as a digital adding stage DADD.

5. Test device according to Claim 1, **characterised in that** the simulation electronics unit (102) has a digital signal-generating unit A for generating two sine signals SIN1 and SIN2 phase-shifted with respect to one another.

6. Test device according to one of the preceding claims, **characterised in that** the test device (100) has a printer output (130) for outputting the test result.

7. Method for testing a Coriolis mass flowmeter using a test device according to one of the preceding claims, with which two test signals US1, US2 are generated, which correspond to the phase-shifted measurement transducer signals of a Coriolis mass flowmeter at predefined values of the characteristic data of mass flow rate, density and/or pipe diameter, which are evaluated in the Coriolis mass flowmeter and where the result values of this evaluation are transmitted to the test device, the result values being compared in the test device with desired values predefined by the characteristic data and, depending on the deviation, a validation result being determined.

## Revendications

1. Appareil destiné au contrôle d'un débitmètre massique Coriolis, appareil pouvant être relié à un débitmètre massique Coriolis (50) et qui comporte une unité électronique de simulation (102) destinée à la génération de signaux de test US1, US2, qui correspondent aux signaux déphasés d'un débitmètre massique Coriolis pour des valeurs déterminées, sélectionnables, relatives aux grandeurs caractéristiques telles que le débit massique, la densité, le diamètre de conduite, etc., et qui sont interprétés, en lieu et place des signaux du débitmètre massique Coriolis, dans une unité électronique (10) du débitmètre massique Coriolis,
l'appareil de contrôle étant conçu de telle sorte à pouvoir lire les valeurs des grandeurs caractéristiques, qui sont mémorisées dans le débitmètre massique Coriolis, à l'exception du débit massique, après l'établissement de la liaison de l'appareil de contrôle avec le débitmètre massique Coriolis.

2. Appareil de contrôle selon la revendication 2, **caractérisé en ce que** l'unité électronique de simulation (102) comporte un étage additionneur E, qui additionne ou soustrait de façon croisée un signal sinusoïdal et un signal cosinusoïdal en vue de la génération de deux signaux déphasés.

3. Appareil de contrôle selon la revendication 2, **caractérisé en ce que** l'étage additionneur est conçu en tant qu'étage additionneur AADD analogique.

4. Appareil de contrôle selon la revendication 2, **caractérisé en ce que** l'étage additionneur est conçu en tant qu'étage additionneur DADD numérique.

5. Appareil de contrôle selon la revendication 1, **caractérisé en ce que** l'unité électronique de simulation (102) comporte une unité de génération de signaux numériques A destinée à la génération de deux signaux sinusoïdaux SIN1 et SIN2 déphasés l'un par rapport à l'autre.

6. Appareil de contrôle selon l'une des revendications précédentes, **caractérisé en ce que** l'appareil de contrôle (100) comporte une sortie imprimante (130) pour la sortie du résultat de contrôle.

7. Procédé destiné au contrôle d'un débitmètre massique Coriolis à l'aide d'un appareil de contrôle selon l'une des revendications précédentes, avec lequel sont générés deux signaux de test US1, US2, qui correspondent aux signaux de transmetteur d'un débitmètre massique Coriolis pour des valeurs prédéfinies des grandeurs caractéristiques débit massique, densité et/ou diamètre de conduite, qui sont interprétés dans le débitmètre massique Coriolis et où les valeurs de résultat de cette interprétation sont transmises à l'appareil de contrôle, les valeurs de résultat étant comparées, dans l'appareil de contrôle, avec des valeurs de consignes prédéfinies par les grandeurs caractéristiques, et un résultat de validation étant déterminé selon l'écart constaté.
